# EUROPEAN PATENT APPLICATION

(11) **EP 1 096 449 A2**
(43) Date of publication of application: **02.05.2001**
(21) Application number: 00305674.4
(22) Date of filing: 05.07.2000
(51) Int. Cl.: G07F 19/00

(54) **Tokenless vending system**

(30) Priority: 27.10.1999 US 427804
(71) Applicant: Freedompay Inc., Wayne, Pennsylvania 19087 (US)
(72) Inventor: Pons, Robert M., Gladwyne, Pennsylvania 19035 (US); Durovsik, Thomas E., Villanova, Pennsylvania 19085 (US)
(74) Representative: Lyons, Andrew John

(57) **Abstract**

A method of an apparatus for tokenless vending, and tokenless shopping to enable an account holder to buy goods and services without having to be in possession of cash, cards, or any other physical token of value or identity. To make a purchase, the purchaser simply inputs his account number and password on a keypad at a vending machine or other point of sale. The point of sale equipment transmits the account code and password to a central server. The server determines whether the said at least one code input by the purchaser agrees with the at least one identifying code associated with an active account. The vendor system confirms, either at the server or at the point of sale, that the price of the desired goods or services does not exceed the available credit on the purchaser's account. If all is in order, the goods or services are provided to the purchaser at the point of sale, and the server reduces the available credit on the account accordingly.

## Description

The invention relates to the automated sale of goods to the public. In particular, the invention relates to a method and apparatus for selling goods, and charging the cost of the goods to an account held by the purchaser. The invention relates especially to such a method and apparatus in which the point of sale is connected to a central accounts service over the world wide web.

It has been common practice for many years to purchase goods and services and to pay for them with a credit card, debit card, or the like. Possession of the card, optionally combined with a Personal Identification Number ("PIN number") or a signature, serves to identify the purchaser, and to establish his authority to charge the costs of the goods to an associated credit or deposit account. It is also possible to purchase goods and services by giving a credit card number over the telephone or, more recently, over the internet. In that case, either the purchaser must subsequently collect the goods or services, or they must be sent to him. If he collects, he is required to produce the credit card at the point of collection. If the goods are sent to the purchaser, he never needs to produce the credit card, but the delivery address provides additional identification.

Vending machines accepting cash are of course well known, as are machines operated by a pre-payment card that records on a magnetic stripe or other storage medium an amount of credit from which the cost of purchases can be deducted.

However, all of the above systems have the disadvantage, from the purchaser's point of view that, in order to purchase goods or services for immediate use from a public sale point, he must carry with him a token that either represents value in itself, for example, currency notes, coins, or a prepayment card, or identifies the possessor as entitled to charge expenditure to an account, for example, a credit card or debit card.

According to one aspect, the present invention provides a method of tokenless vending, and tokenless shopping. The vendor provides a plurality of points of sale accessible to the general public and a central server, the points of sale being in communication with the server. Potential purchasers establish accounts with the vendor, credit limits are established for such accounts, at least one identifying code is associated with each such account, and the vendor stores details of the accounts, including the said at least one identifying code for each account, at the server. To make a purchase at one of the points of sale, the purchaser inputs the at least one identifying code for his account, without having to produce a token bearing such code, and indicates the goods or services that he desires to purchase. The point of sale receives the code input by the purchaser and the indication of the desired good or service, and transmits the said at least one input code to the server. The server determines whether the said at least one code input by the purchaser agrees with the at least one identifying code associated with an active account. The vendor system confirms that the price of the desired goods or services does not exceed the available credit limit on the account. If all is in order, the goods or services are provided to the purchaser at the point of sale, and the server reduces the available credit limit on the account accordingly.

According to another aspect, the present invention provides apparatus for tokenless vending, comprising a central server arranged to store details of accounts for potential purchasers, including credit limits for such accounts and at least one identifying code associated with each such account, and a plurality of points of sale in places accessible to the general public and capable of communicating with the server. The points of sale are arranged to receive from a potential purchaser at least one input code, without receiving any such code from a token, and on indication of at least one desired good or service, and to transmit the said at least one input code to the server. The server is arranged to determine whether the said at least one input code agrees with the at least one identifying code associated with an active account. The apparatus is further arranged to confirm that the price of the at least one good or service does not exceed the available credit limit on the account in question. The point of sale is arranged to provide the at least one good or service. The server is arranged to reduce the credit limit on the account in question according to the price of the purchase.

This invention will now be further described, by way of example only, with reference to the accompanying drawings, in which:-
Figure 1 is a somewhat simplified front view of a vending machine of the present invention;
Figure 2 is a block diagram of the vending machine of Figure 1; and
Figure 3 is a schematic diagram of a network of the present invention;
Figure 4 is a process flow diagram depicting server/user interaction;
Figure 5 is a process flow diagram depicting system initialization and system/server communications; and
Figure 6 is a process flow diagram depicting user/systems interaction.

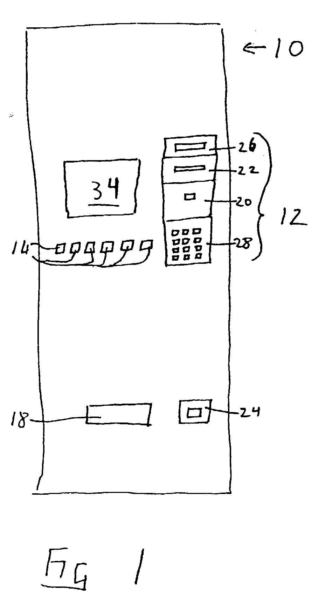

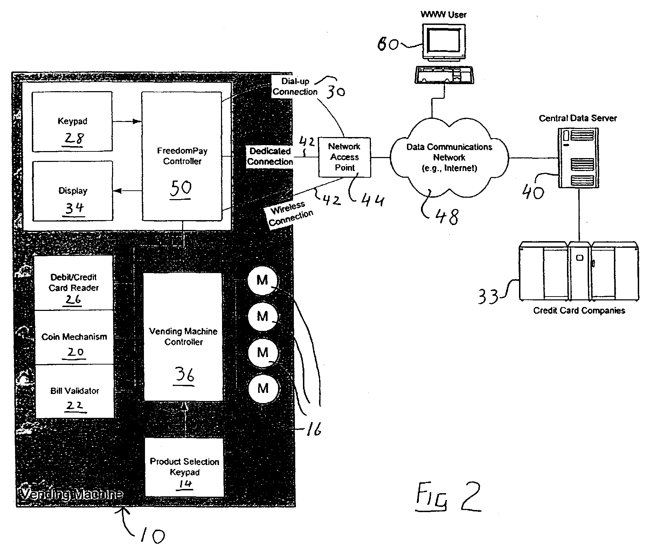

Figures 1 and 2 illustrate a vending machine 10, containing stocks of several different sorts of merchandise (not shown). When a purchaser wishes to purchase merchandise, he provides a suitable payment by means of appropriate device 12 on the exterior of the machine 10, and indicates which sort of merchandise he wishes to purchase, for example by pressing an appropriate vend button 14. The vending machine verifies the sufficiency and validity of payment and, if that is in order, actuates an appropriate column vend motor 16 or other mechanism, and releases the item of merchandise to a dispensing slot 18 or other outlet from which it can be removed by the purchaser.

The payment devices 12 preferably include a coin feed mechanism 20 and/or a currency bill acceptor 22, with the usual mechanisms for verifying the authenticity and denomination of the coins and bills, and an arrangement 24 for dispensing change. The payment devices 12 preferably also include a credit and/or debit card acceptor 26. If a credit and/or debit card acceptor is present, a keypad 28 may enable the purchaser to enter a PIN number, and a mod em 30 and/or digital port 32 (to be described in more detail below) may enable the vending machine to communicate with the card issuer 33 to validate the card and, if appropriate, to verify the amount of credit available on it.

The front of the vending machine 10 may also include a display device 34, to guide the purchaser through the purchase process or provide other information that may be useful.

The operation of the vending machine 10 is controlled by an internal vending machine controller (VMC) 36, preferably an electronic control board.

The aspects of the vending machine 10 described so far may be conventional and in the interests of conciseness are not described in more detail. It will be understood by the person skilled in the art that numerous alternatives exist or may be conceived of, which can be substituted for the specific structures and mechanisms mentioned above. For example, a touch-screen unit may be provided instead of or in addition to, the separate display device 34, keypad 28, and vend buttons 14. The display device 34 and/or touch-screen unit may be equipped with, or supplemented by, a video display.

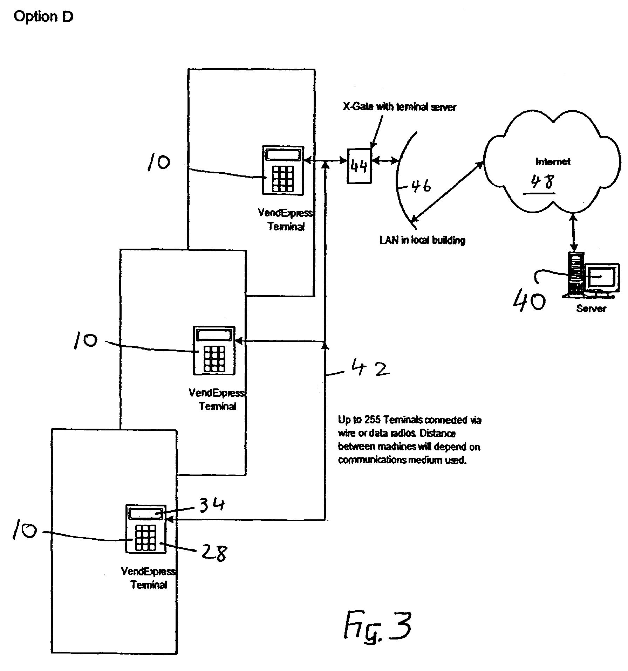

The modem 30 or digital port 32 is connected to a server 40 via any convenient means of telecommunication. As shown in Figure 3, a group of vending machines 10 that are close together are connected by local dedicated links 42, which may be, for example, a digital cable to radio link, to a gate 44. The gate 44 connects the dedicated links 42 to a local area network (LAN) 46, which is connected to the internet 48, to which the server 40 is also connected. It is understood that high-level encryption is used for the transmission over the internet. If an internet connection is not available near to the location of the vending machine 10, then a modem 30 may be arranged to communicate via a conventional telephone (POTS) line, either with server 40 or with an internet point of access. Alternatively, the vending machine may be equipped both with a radio or LAN connection 42 and with a dial-up POTS connection 30. If the necessary service connections are available at the location, the vending machine 10 may then be configured to use the LAN or wireless connection 42 as a primary communications path, and to use the POTS line 30 as backup in case the primary communications path fails.

In accordance with the present invention, the vending machine 10 is equipped for tokenless purchases using the keypad 28. As shown in Fig. 2, the vending machine 10 is equipped with a controller 50 for tokenless purchase transactions in accordance with the present invention. That controller 50 interfaces with the keypad 28, the display 34, and the vending machine controller 36. Preferably, the controller 50 is so constructed and programmed that the controller 36 can treat it as just another credit or debit card reader. The controller 36 can then be entirely conventional. However, since credit/debit card transactions are commonly initiated by inserting a card into the card reader 26, it may be necessary to provide a special interface between the keypad 28 and the controller board 50 so that a tokenless purchase transaction can be initiated from the keypad.

A purchaser desiring to make tokenless purchases first communicates with the operating company, to establish an account. The purchaser is assigned an account number, is assigned or selects a password, and in the preferred embodiment pays a sum of money to establish a credit balance on the account. The account could be set up over the internet, and the initial payment could be made by credit or debit card, in digital cash, or charged to a telecommunications account. The purchaser may also authorize the operating company to replenish the account as necessary by a direct debit from a financial services account or the like held by the purchaser. Once the account has been set up, the account details are stored on the server 40.

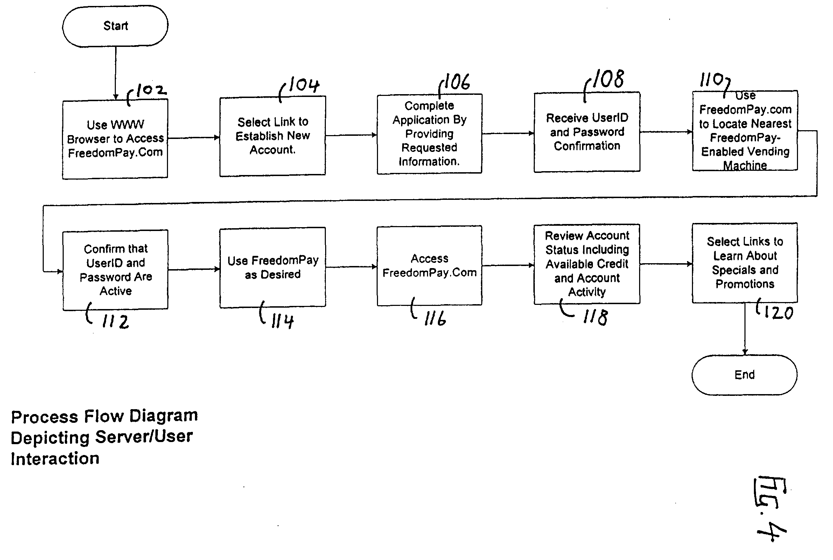

In one embodiment of the process, as shown in Figure 4, in step 102 the purchaser uses a computer 60 with a world wide web browser to contact the operating company's web site. In step 104, the purchaser selects a link to establish a new account. In step 106, the purchaser enters information requested by the operating company, typically including credit card details and optionally a password chosen by the purchaser. In step 108, the operating company's computer confirms that the account has been created, issues the account number, and confirms that the password is allowable.

The purchaser may then use the web site for various purposes associated with the account. As shown in step 110, the purchaser may locate a nearby vending machine 10. As shown in step 112, the purchaser may confirm that his or her account is still active and the password is still valid. As shown in step 116 and 118, the purchaser may review the state of the account, including the amount of available credit and recent account activity. As shown in step 120, by following links from the operating company's web site the purchaser may learn about special offers and promotions available to account holders.

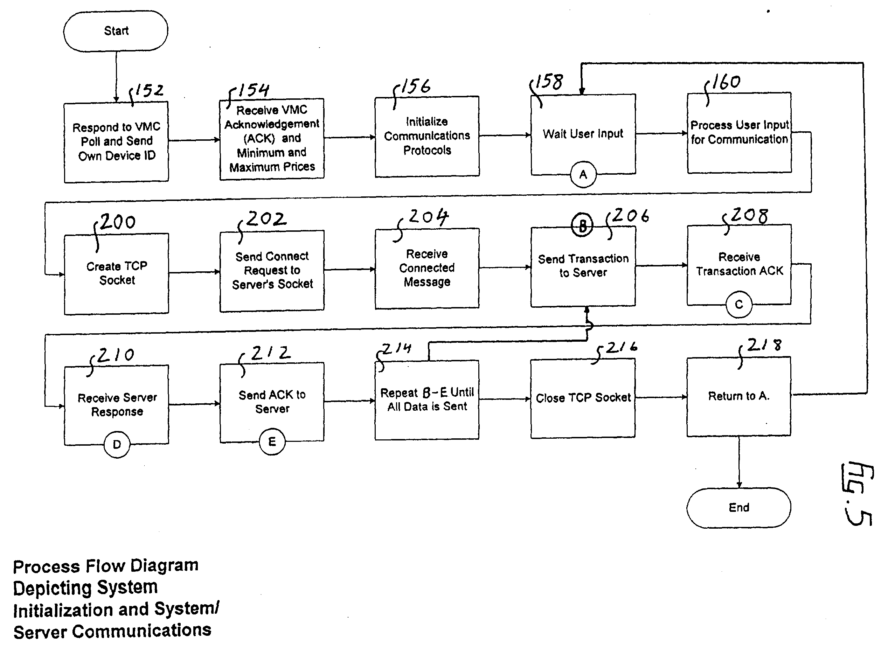

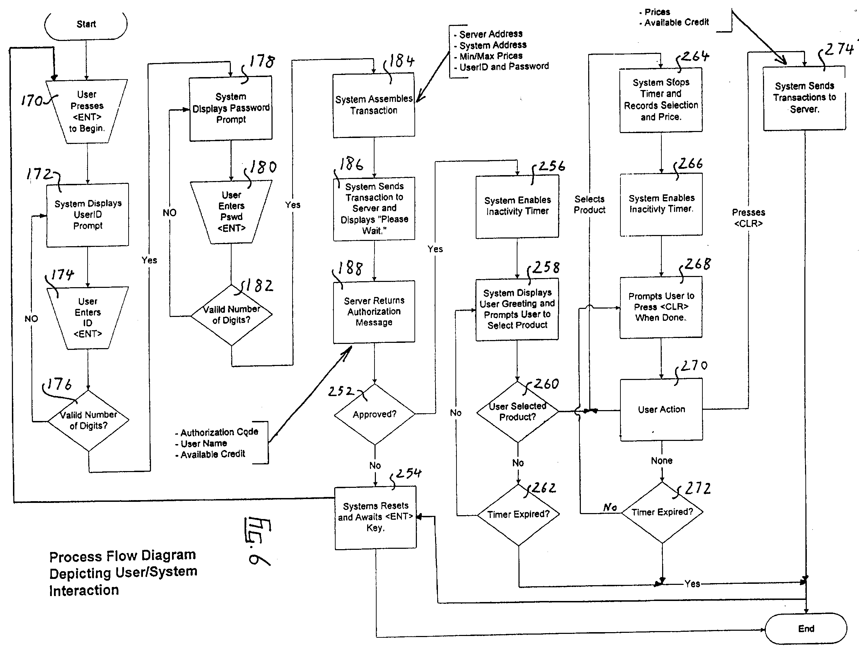

Referring to Figure 5, which shows the interactions between the vending machine 10 and the operating company's server, and to Figure 6, which shows the interactions between the purchaser and the vending machine 10, the process of purchasing goods from a vending machine 10 is as follows:

At the start 150 of Figure 5, it is assumed that the vending machine 10 and the server 40 are running, and are able to communicate via the network. The procedures necessary to reach that stage may be conventional and, in the interests of conciseness, are not described. At step 152, the VMC 36 polls the various peripheral devices attached to it and the tokenless transaction controller 50 responds by sending its device ID to the VMC. At step 154, the vending machine 10 receives the VMC's acknowledgement of the device ID, and the maximum and minimum prices of goods available for sale from the machine 10. At step 156, the vending machine 10 initializes its communications protocols, and then in step 158 the vending machine waits for a purchaser. While it is waiting, the vending machine may display advertising or attention-attracting material on the display 34.

At step 160, shown in more detail in Figure 6, when the purchaser wishes to make a purchase, he first enters at step 170 an indication that a tokenless purchase is desired, for example, by pressing a key on the keypad 28. In response to a prompt at step 172 from the display 34, the purchaser then enters an account number at step 174 using the keypad 28. At step 176, the control board 36 checks that the account number is superficially acceptable, for example, that it has a valid number of digits. If the account number is unacceptable, the machine 10 loops back to step 172, and prompts for a new account number. If the account number is acceptable, the machine proceeds to step 178, and prompts the purchaser for a PIN number or password. The purchaser enters a PIN number at step 180 using the keypad 28. At step 182, the control board 36 checks that the account number is superficially acceptable, for example, that it has a valid number of digits. If the PIN number is unacceptable, the machine 10 loops back to step 180, and prompts for a new account number.

If the PIN number is acceptable, the machine proceeds to step 184, and prepares a transaction package containing the account number and password for network transmission. The package may also contain the maximum and minimum prices provided by the VMC 36 at step 154. At step 186, the machine 10 transmits the transaction to the server, and at step 188 receives the server's reply. The reply may merely indicate whether or not the account number and password together denote a valid account, or it may contain additional information. Such additional information may include an authorization code for use in the machine's transaction log, the user's name, for use in personalizing further prompts, and the amount of available credit. If the amount of available credit is less than the minimum price of an item for sale, the transaction may be denied authorization at this stage.

As shown in Figure 5, steps 186 and 188 may be implemented as follows. In step 200, the vending machine 10 creates a TCP socket for communication with the network. In step 202, the vending machine 10 sends a connect request to the server 40's TCP socket. At step 204, the vending machine receives a message from the server 40 confirming that a connection has been established. At step 206, the vending machine sends an assembled data transaction to the server 40, and at step 208, the vending machine receives an acknowledgement of the transaction from the server. At step 210 the vending machine receives a response transaction from the server 40, and at step 212, the vending machine sends an acknowledgement of that transaction to the server. At step 214, if there is further data waiting to be sent, the vending machine loops back to step 206. If there is no further data waiting to be sent then at step 216 the vending machine closes its TCP socket, and at step 218 the vending machine returns to step 158, where the communication process waits until further user input is ready to be communicated to the server 40.

At step 252, the vending machine 10 checks the response received from the server received at step 188. If the response is unfavorable, the system resets at step 254 to a waiting condition, until a purchaser initiates a new transaction sequence at step 170. If the server response is favorable, the system proceeds to step 256, where it starts a timer, and then to step 258, where it greets the purchaser, optionally using the name obtained from the server 40 at step 188, and prompts the purchaser to select a product. At step 260, the system tests whether the purchaser has indicated a desired purchase by pressing one of the vend buttons 14. If not, then the system proceeds to step 262 and tests whether the timer has expired. If the timer has expired, indicating that the purchaser has not selected a product within a preset time after the account name and password were approved, then the system goes to step 254, where it resets and awaits a new transaction.

As well as greeting the purchaser by name, the system may, either automatically or on demand by the purchaser, display information about the status or purchase history of the account from the server. The system may also display advertising or other material that is selected in the light of what is known about the individual purchaser. For example, the material displayed may include special offers relevant to recent or regular purchases, goods complementary to those previously purchased, or alternatives. Whenever transaction data relating to a purchase are sent by the vending machine 10 to the server 40, the server may send updated display material appropriate to that purchase. The information displayed need not be confined to data stored by the server 40. The server 40 may store internet addresses and send them to the vending machine 10, enabling appropriate information from anywhere on the internet to be brought to the display 34. If the vending machine is equipped with a printer (not shown), such as the receipt printers that are commonly fitted to credit and debit card accepting vending machines, then coupons for free or discounted goods or services could be printed on the spot. Instead, or in addition, any of the above-mentioned additional information could be sent to the purchaser's home e-mail address.

If the user selects a product before the timer expires, then the process branches from step 260 to step 264, where the system stops the timer and records the selection and the price. The system also deducts the prices of the product from the user's credit, and compares the remaining credit balance with the minimum product price obtained at step 154. If there is sufficient credit for a further purchase, at step 266 the timer is restarted, and at step 268 the system prompts the user either to select a further product or to press a key signifying that the transaction is complete. At step 270, the system tests whether the purchaser has indicated a desired purchase by pressing one of the vend buttons 14, or has signified that the transaction is complete. If the purchaser has done neither, then the system proceeds to step 272 and tests whether the timer has expired. If the timer has expired, indicating that the purchaser has not selected a product within a preset time after the last selection was registered, then the system goes to step 254, where is resets and awaits a new transaction. Instead, the system may go to step 274 below.

If the user selects a further product before the timer expires, then the process loops back from step 270 to step 264, where the system stops the timer and records the selection and the price. If the purchaser signified that the purchase transaction is complete, the system proceeds to step 274, where the list of purchases and prices are transmitted to the server, and approval for the complete purchase transaction is obtained. The communication process follows steps 160 and 200 to 218 described above.

If at any time the remaining credit on the purchaser's account is below the minimum price of a product on sale, so that no further product selection is possible, the system goes to step 270, but prompts the user only to confirm the purchases already selected, and not to make a further purchase.

If the amount of credit on the purchaser's account, obtained at step 188 or calculated at step 264, is between the minimum and maximum product prices obtained at step 154, then at step 260 or 270 the system must verify that the specific product selected has a price no greater than the amount of available credit. If the purchaser selects a product costing more than the available credit, then the transaction is rejected. An explanation may be given on the display 34, and the purchaser may be prompted at step 270 to select a cheaper product.

Provided that the VMC 36 or the controller 50 has made the necessary calculations and verified that the credit on the account is sufficient to pay for the item or items selected, at step 274 it may not be necessary for the server 40 to approve the transaction. Once any necessary approval has been obtained, the vending machine dispenses the requested products. The system then goes to step 254, resets, and waits for a new customer.

As is indicated by the branches to "END" from steps 218, 254, 262, 272 and 274 in Figures 5 and 6, the vending machine may shut down operations at pre-programmed times or in response to pre-programmed conditions but, except in an emergency, should preferably not do so while it is in the process of dealing with a purchaser.

When the balance in the purchaser's account falls too low, either the purchaser is invited to deposit more money, or it is automatically replenished by debiting it from the purchaser's bank or other account.

Although the invention has been described with reference to an exemplary embodiment thereof, it will be understood by those skilled in the art that various changes, omissions, and additions may be made thereto without departing from the spirit and scope of the invention as recited in the attached claims.

For example, although the invention has been described as applied to a vending machine, it could equally be applied to other points of sale, such as a retail store. Many retail stores already have a card reader with a keypad for accepting payments by debit card, and such a keypad could be applied to the tokenless vending system of the present invention. In such cases, it is preferred for the customer to key the account name and password into the system. That is generally considered to minimize the risk of a third party, such as another customer in the store, could learn and subsequently misuse the account name and password. However, in appropriate cases, the customer could communicate one or both of the account code and password to the cashier or other member of staff, who could then enter the information into the system, for example, using the keypad of a cash register.

As well as a retail store, the system could also be used in, for example, a fast food or other drive-through. Instead of paying money, or handing a card, to a cashier, the purchaser would merely need to key his or her account number and password into a keypad placed next to the vehicle path.

The system according to the invention could also be used at movie theaters and other places of entertainment, or other places supplying a service for immediate use or enjoyment in exchange for payment. From the system's point of view, the supply of such a service can be treated in exactly the same way as the supply of goods for immediate possession or use by the purchaser.

The vending machine 10 could be equipped as a world wide web browser, enabling the purchaser not only to purchase goods or services for immediate use or possession, in accordance with the present invention, but also to order goods or services for later delivery, with the cost being charged either to the purchaser's account or to a conventional debit or credit account.

## Claims

1. A method of tokenless vending, comprising the steps of:
providing a plurality of points of sale (10) available to the general public;
providing a central server (40), the points of sale being capable of communicating with the server;
establishing accounts for potential purchasers;
establishing credit limits for such accounts;
establishing at least one identifying code associated with each such account;
storing details of the accounts, including the said at least one identifying code for each account, at the server;
receiving from a potential purchaser at one of the points of sale at least one input code, without receiving any such code from a token, and an indication of at least one desired good or service;
transmitting the said at least one input code to the server;
determining whether the said at least one input code agrees with the at least one identifying code associated with an active said account;
if so, confirming that the price of the at least one good or service does not exceed the credit limit on the account;
if confirmed, providing the at least one good or service at the point of sale, and reducing the credit limit on the account accordingly.

2. A method as claimed in claim 1, wherein the point of sale is a vending machine (10).

3. A method as claimed in claims 1 or 2, wherein the said at least one identifying code comprises an account number and a password.

4. A method as claimed in claim 1, 2 or 3, wherein the point of sale is provided with a device (28) having areas that correspond to characters making up such a code and are responsive to being pressed, and the step of receiving the at least one identifying code comprises responding to those areas being pressed.

5. A method as claimed in claim 4, wherein the device having areas corresponding to characters is a keypad (28).

6. A method of tokenless shopping, comprising the steps of:
establishing an account with an operator who provides a plurality of points of sale (10) and a central service (40), the points of sale being available for the use of the general public and capable of communicating with the server;
establishing a credit limit for the account;
establishing at least one identifying code associated with each such account;
inputting at one of the points of sale the said at least one identifying code, without providing a token bearing such code, and an indication of at least one desired good or service;
waiting while the point of sale transmits the input code to the server, the sever confirms that the input code agrees with the at least one identifying code associated with the said account, the account is active, and the price of the at least one good or service does not exceed the credit limit on the account; and
receiving the at least one good or service at the point of sale.

7. A method as claimed in claim 6, wherein the point of sale is a vending machine (10).

8. A method as claimed in claim 6 or 7, wherein the said at least one identifying code comprises an account number and a password.

9. A method as claimed in claims 6, 7, or 8 wherein the point of sale is provided with a device (28) having areas that correspond to characters making up such a code and are responsive to being pressed, and the step of inputting the at least one identifying code comprises pressing selected ones of those areas.

10. A method as claimed in claim 9, wherein the device having areas corresponding to characters is a keypad (28).

11. Apparatus for tokenless vending, comprising:
a central server (40) arranged to store details of accounts for potential purchasers, including credit limits for such accounts and at least one identifying code associated with each such account; and
a plurality of points of sale (10) available for the use of the general public and capable of communicating with the server, the points of sale being arranged to receive from a potential purchaser at least one input code, without receiving any such code from a token, and an indication of at least one desired good or service, and to transmit the said at least one input code to the server;
the server being arranged to determine whether the said at least one input code agrees with the at least one identifying code associated with a said account, if so, to confirm that the account in question is active;
the apparatus further being arranged to confirm that the price of the at least one good or service does not exceed the credit limit on the account in question;
the point of sale being arranged to provide the at least one good or service; and
the server being arranged to reduce the credit limit on the account in question according.

12. Apparatus as claimed in claim 11, wherein the point of sale is a vending machine (10).

13. Apparatus as claimed in claim 11 or 12, wherein point of sale comprises a device (28) having pressure sensitive areas corresponding to characters making up such a code.

14. Apparatus as claimed in claim 13, wherein the device having areas corresponding to characters is a keypad (28).

15. A tokenless vending machine accessible to the general public and comprising:
a stock of goods for sale to members of the public;
a data input device (28) for receiving from a potential purchaser at least one input code, without receiving any such code from a token and an indication of at least one desired good or service;
a communications device (44) capable of communicating with the server, and arranged to transmit the said at least one input code to a remote server, and to receive messages from the server; and
a dispensing mechanism arranged to provide the desired goods to the purchaser upon receipt of an appropriate message from the server.

16. A vending machine as claimed in claim 15, wherein the communications device (44) is arranged to transmit to the server the price of the desired goods.

17. The vending machine as claimed in claim 15 or 16, wherein the communications device (44) is arranged to receive from the sever an indication of a credit limit, and the vending machine comprises a processor arranged to compare the price of the desired goods with the credit limit, to cause the dispensing mechanism to provide the goods to the purchase only if the price does not exceed the credit limit, and to transmit to the server the price of the goods actually provided.
